# EUROPÄISCHE PATENTSCHRIFT

(11) **EP 4 506 735 B1**
(45) Veröffentlichungstag und Bekanntmachung des Hinweises auf die Patenterteilung: **08.10.2025**
(21) Anmeldenummer: 23190723.9
(22) Anmeldetag: 10.08.2023
(51) Int. Cl.: G01V 8/20, F16B 37/00

(54) **LICHTVORHANG**
LIGHT CURTAIN
RIDEAU LUMINEUX

(43) Veröffentlichungstag der Anmeldung: 12.02.2025
(73) Patentinhaber: Leuze electronic GmbH + Co. KG, 73277 Owen/Teck (DE)
(72) Erfinder: Tull, Andreas, 82229 Seefeld (DE); Koperski, Joachim, 85521 Ottobrunn (DE); Luthardt, Stephan, 73277 Owen (DE); Haberl, Paul, 80999 München (DE); Feller, Bernhard, 86316 Friedberg (DE)
(74) Vertreter: Ruckh, Rainer Gerhard

(56) Entgegenhaltungen:
- DE-A1- 102007 005 439
- DE-C1- 4 312 947
- US-A- 4 768 907

## Beschreibung

Die Erfindung betrifft einen Lichtvorhang.

Derartige Lichtvorhänge dienen zur Erfassung von Objekten in einem Überwachungsbereich. Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern. Weiterhin ist eine Auswerteeinheit vorgesehen, in welcher in Abhängigkeit von Empfangssignalen der Empfänger ein Objektfeststellungssignal generiert. Dieses Objektfeststellungssignal ist vorzugsweise ein binäres Schaltsignal dessen Schaltzustände angeben, ob sich ein Objekt im Überwachungsbereich befindet oder nicht.

Zur Befestigung der Gehäuse an einer Unterlage, wie z.B. einer Wand oder einem Träger, sind Befestigungsmittel vorgesehen. Die Befestigungsmittel können als Anschraubelemente ausgebildet sein, die an der Unterlage festgeschraubt werden können.

Die Befestigungsmittel können jeweils einen Nutenstein aufweisen, der in eine Nut eines Gehäuseprofils des Gehäuses eingeführt wird. Die Einführung eines Nutensteins erfolgt über eine Gehäuseöffnung an einem längsseitigen Ende des Gehäuseprofils. Der Nutenstein weist einen rechteckigen Querschnitt auf. Dabei wird der Nutenstein mit seiner Schmalseite in die Nut eingeführt und dann um 90° gedreht, so dass der Nutenstein sicher hinter einer Öffnung der Nut in der Nut fixiert ist.

Das Drehen des Nutensteins in der Nut ist j edoch umständlich und zeitaufwändig.

Nach erfolgter Montage des oder der Nutensteine wird das Gehäuseprofil an seinen längsseitigen Enden mit jeweils einer Endkappe verschlossen oder ist bereits vor der Montage verschlossen. Da sich die Nut zur Aufnahme der Nutensteine nur entlang des Gehäuseprofils nicht aber entlang der Endkappe erstreckt, können die Positionen der Nutensteine nicht über die gesamte Länge des Gehäuses variiert werden, was die Befestigungsmöglichkeiten des Gehäuses einschränkt. DE 43 12 947 offenbart ein aus dem Stand der Technik bekanntes Lichtgittergehäuse, welches an einer Säule befestigt ist. Das Gehäuse weist als Führung eine Nut auf, die an einer Seitenwand des Gehäuses in dessen Längsrichtung verlaufend angeordnet ist und die in einem C-Profil ausgebildet ist.

Der Erfindung liegt die Aufgabe zugrunde, eine einfache und zugleich zuverlässige Befestigungsmöglichkeit für einen Lichtvorhang der eingangs genannten Art bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich mit einer Reihenanordnung von Lichtstrahlen emittierenden Sendern mit einer Reihenanordnung von Lichtstrahlen empfangenden Empfängern, deren Empfangssignale in einer Auswerteeinheit ausgewertet werden. Wenigstens ein Gehäuse ist vorhanden, in welchem die Sender und/oder Empfänger vorhanden sind. Das Gehäuse weist eine sich über dessen Länge erstreckende Nut auf, wobei Randsegmente des Gehäuses eine Öffnung der Nut begrenzen. Die Öffnung bildet eine Ausmündung der Nut in oder an einer Seitenwand des Gehäuses. Die Öffnung ist in einem Teilbereich der Nut verbreitert, wodurch eine Einführöffnung gebildet ist. Befestigungsmittel sind vorhanden, wobei jedes Befestigungsmittel einen Nutenstein aufweist. Der Nutenstein kann über die Einführöffnung eingeführt werden, wobei die Breite des Nutensteins kleiner als die Breite der Einführöffnung und größer als die Breite der Öffnung der Nut ist und wobei die Länge des Nutensteins größer als die Länge der Einführöffnung ist.

Die Erfindung betrifft auch ein entsprechendes Verfahren zur Befestigung des Lichtvorhangs.

Der erfindungsgemäße Lichtvorhang wird in bekannter Weise zur Erfassung von Objekten in einem Überwachungsbereich eingesetzt. Die Sender und Empfänger des Lichtvorhangs bilden dabei zusammenarbeitende Sender-Empfänger-Paare derart, dass bei freiem Überwachungsbereich die Lichtstrahlen des Senders eines Sender-Empfänger-Paars ungehindert auf den Empfänger dieses Sender-Empfänger-Paars treffen. Bei einem Eingriff eines Objekts in dem Überwachungsbereich unterbricht dieses den Strahlengang zumindest einer der Lichtstrahlen, wodurch das Objekt erkannt wird. Hierzu wird in der Auswerteeinheit des Lichtvorhangs abhängig von den Empfangssignalen der Empfänger ein Objektfeststellungssignal generiert.

Die Sender des Lichtvorhangs sind insbesondere in einer Sendereinheit integriert, während die Empfänger in einer Empfängereinheit integriert sind. Dabei weist die Sendereinheit ein erstes Gehäuse zur Aufnahme der Sender auf. Entsprechend weist die Empfängereinheit ein zweites Gehäuse zur Aufnahme der Empfänger auf. Die Sendereinheit und die Empfängereinheit sind an gegenüberliegenden Seiten des Überwachungsbereichs angeordnet.

Gemäß einer alternativen Ausgestaltung ist der Lichtvorhang als Reflexions-Lichtvorhang ausgebildet. Dann sind die Sender und Empfänger in einem Gehäuse einer Sender-Empfänger-Einheit integriert, die an einem Rand des Überwachungsbereichs angeordnet ist. Am gegenüberliegenden Rand des Überwachungsbereichs befindet sich ein Reflektor. Bei freiem Überwachungsbereich werden die von einem Sender emittierten Lichtstrahlen durch den Überwachungsbereich geführt, treffen dann auf den Reflektor und werden an diesem so reflektiert, dass die Lichtstrahlen nochmals durch den Überwachungsbereich geführt werden und dann auf den Empfänger des jeweiligen Sender-Empfänger-Paars treffen.

Das oder jedes Gehäuse des erfindungsgemäßen Lichtvorhangs kann mittels Befestigungsmitteln an einer Unterlage, wie z.B. einer Wand oder einem Träger, befestigt werden.

Das oder jedes Gehäuse weist hierzu eine sich in dessen Längsrichtung entsprechende Nut auf, wobei sich diese Nut über diese gesamte Länge des Gehäuses erstrecken kann.

Vorteilhaft ist die oder jede Nut eine C-Nut.

Die Nut weist eine Öffnung auf, die in oder an einer Seitenwand des Gehäuses ausmündet. Die Öffnung wird von Randsegmenten des Gehäuses begrenzt, so dass die Öffnung eine geringere Breite als der daran anschließende Innenraum der Nut aufweist. Die Öffnung erstreckt sich in Längsrichtung der Nut.

Erfindungsgemäß ist die Öffnung in einem Teilbereich der Nut verbreitert, wodurch eine Einführöffnung gebildet ist.

Das oder jedes Befestigungsmittel weist einen Nutenstein auf. Der Nutenstein kann über die Einführöffnung in die Nut eingeführt werden. Dabei ist die Breite des Nutensteins kleiner als die Breite der Einführöffnung, jedoch größer als die Breite der Öffnung der Nut. Weiterhin ist die Länge des Nutensteins größer als die Länge der Einführöffnung.

Dadurch kann der Nutenstein durch Schrägstellen gegenüber der Längsachse in die Einführöffnung eingeführt und mit dem vorderen Ende in den an die Einführöffnung anschließenden Bereich der Nut eingeschoben werden, wonach auch das hintere Ende des Nutensteins über die Einführöffnung in die Nut eingeführt wird und so der Nutenstein komplett in der Nut liegt.

Der Nutenstein kann dann in der Nut verschoben werden, um das Befestigungsmittel geeignet zu positionieren.

Da die Länge des Nutensteins größer ist als die Länge der Einführöffnung ist in jeder Position des Befestigungsmittels gewährleistet, dass zumindest ein Segment des Nutensteins des Befestigungsmittels nicht im Bereich der Einführöffnung liegt, sondern im Bereich der Öffnung der Nut. Da die Breite des Nutensteins größer ist als die Breite der Öffnung, ist der Nutenstein gegen ein Herauslösen aus der Nut gesichert.

Ein wesentlicher Vorteil der Erfindung besteht darin, dass der Nutenstein über die Einführöffnung nur in die Nut eingeschoben werden muss, wobei die Verschieberichtung in Längsrichtung der Nut verläuft. Ein anschließendes Drehen des Nutensteins in der Nut zur Lagesicherung des Nutensteins in der Nut ist nicht erforderlich, was die Montage des Befestigungsmittels am Gehäuse wesentlich vereinfacht.

Gemäß einer vorteilhaften Weiterbildung kann die Nut mehrere Einführöffnungen aufweisen.

Damit kann ein Nutenstein eines Befestigungsmittels an mehreren Stellen des Gehäuses in die Nut eingeführt werden.

Gemäß einer vorteilhaften Ausgestaltung sind am Gehäuse mehrere Nuten mit Einführöffnungen vorhanden.

Die Nuten können sich an unterschiedlichen Seitenwänden des Gehäuses befinden. Damit kann das Gehäuse in unterschiedlichen Orientierungen an einer Unterlage befestigt werden.

Alle Nuten weisen wenigstens eine Einführöffnung auf. Vorteilhaft sind die Nuten identisch ausgebildet.

Gemäß einer konstruktiv vorteilhaften Ausgestaltung weist das oder jedes Gehäuse als Gehäuseelement ein Gehäuseprofil und zwei Endkappen auf, wobei die Endkappen jeweils eine Gehäuseöffnung an einem längsseitigen Ende des Gehäuseprofils abschließen. Die Nut kann am Gehäuseende geschlossen oder offen sein.

Dabei kann das Gehäuseprofil mehrere in dessen Längsrichtung hintereinander angeordnete Gehäuseprofilsemente aufweisen.

Weiterhin können zwischen dem Gehäuseprofil und den Endkappen und/oder zwischen den Gehäuseprofilsegmenten als weitere Gehäuseelemente Dichtungen ausbildende Zwischenelemente vorhanden sein.

Besonders vorteilhaft erstreckt sich die oder jede Nut über die gesamte Länge des Gehäuses entlang aller Gehäuseelemente. In einer weiteren Ausführung können mehrere Nuten auf einer Gehäuseseite parallel oder teilweise überlappend parallel angeordnet sein, um variable Montagemöglichkeiten zu ermöglichen.

Somit kann die gesamte Länge und Breite des Gehäuses zur Positionierung von Befestigungsmitteln genutzt werden.

Weiter vorteilhaft kann die oder eine Einführöffnung nur im Bereich eines Gehäuseelements vorhanden sein oder sich über mehrere Gehäuseelemente erstrecken.

Damit können die Einführöffnungen an nahezu beliebigen Stellen der Nut angeordnet sein.

Gemäß einer besonders vorteilhaften Ausführungsform besteht jeder Nutenstein aus einem Teil und einem Innenteil. Bei am Gehäuse montiertem Befestigungsmittel liegt das Innenteil innerhalb der Nut.

Damit muss nur das Innenteil des Nutensteins über die Einführöffnung in die Nut eingeschoben werden.

Besonders vorteilhaft ist die Breite des Innenteils größer als die Breite der Öffnung der Nut, jedoch kleiner als die Breite der Einführöffnung. Die Breite des Teils ist kleiner als die Breite der Öffnung.

Dies erleichtert das Einführen des Nutensteins über die Einführöffnung in die Nut. Um das Innenteil über die Einführöffnung in die Nut einzuführen, wird der Nutenstein bezüglich der Längsachse der Nut geneigt und dann in die Einführöffnung eingeschoben. Da das Innenteil schmäler ist als die Öffnung der Nut, kann dann das Innenteil anschließend durch Verschieben weiter in die Nut eingeführt werden, wobei dabei das Teil 22 im Bereich der Öffnung der Nut liegt. Als letzter Verfahrensschritt wird dann das hintere Ende des Innenteils in die Nut gekippt, so dass dann das Innenteil komplett in der Nut verschiebbar gelagert ist.

Das so durchgeführte Einführen des Innenteils in die Nut kann dadurch noch weiter erleichtert werden, dass das Innenteil wenigstens an einem längsseitigen Ende abgeschrägt oder abgerundet, oder die Nut ausreichend tief ist, um den Nutenstein zu kippen.

Weiterhin kann das Innenteil nicht nur einteilig, sondern besonders vorteilhaft auch mehrteilig ausgebildet sein, wobei sich die Teile des Innenteils bevorzugt nur im Bereich der längsseitigen Enden des Teils befinden. Dadurch, dass sich die Teile der Innenteile nur über die Randbereiche des Teils erstrecken, wird das Einführen des Innenteils in die Einführöffnung erheblich erleichtert.

Die so ausgebildeten Nutensteine können Längen aufweisen, die erheblich größer als die Längen der Einführöffnung sind, wodurch der Halt der Nutensteine erheblich verbessert wird.

Vorteilhaft sind die Befestigungsmittel als Anschraubelemente ausgebildet.

Damit kann das Gehäuse an einer Unterlage festgeschraubt werden. Natürlich können auch Befestigungsmittel mit anderen Befestigungsarten eingesetzt werden.

Die Erfindung wird im Folgenden anhand der Zeichnungen erläutert. Es zeigen:
- Figur 1:: Erstes Ausführungsbeispiel des erfindungsgemäßen Lichtvorhangs.
- Figur 2:: Zweites Ausführungsbeispiel des erfindungsgemäßen Lichtvorhangs.
- Figur 3:: Erstes Ausführungsbeispiel eines Gehäuses des erfindungsgemä-ßen Lichtvorhangs in einer Querschnittsdarstellung.
- Figur 4:: Zweites Ausführungsbeispiel eines Gehäuses des erfindungsgemäßen Lichtvorhangs in einer Querschnittsdarstellung.
- Figuren 5a-d:: Beispiele von Einführöffnungen in einer Nut des Gehäuses des erfindungsgemäßen Lichtvorhangs.
- Figur 6:: Einbringen eines Nutensteins in die Einführöffnung einer Nut gemäß Figur 5d.
- Figur 7:: Weiteres Beispiel eines Nutensteins zum Einführen in eine Einführöffnung einer Nut
a) während des Einführens.
b) nach dem Einführen in einer Querschnittsdarstellung des Gehäuses.
- Figur 8:: Weiteres Ausführungsbeispiel eines Nutensteins
a) in einer Einzeldarstellung.
b) während einer ersten Phase der Einführung in eine Einführöffnung.
c) während einer zweiten Phase der Einführung in eine Einführöffnung.
- Figur 9:: Weiteres Ausführungsbeispiel eines Nutensteins
a) in einer Einzeldarstellung.
b) während der Einführung in eine Einführöffnung.
- Figur 10:: Weiteres Ausführungsbeispiel eines Nutensteins
a) in einer Einzeldarstellung.
b) während einer ersten Phase der Einführung in eine Einführöffnung.
c) während einer zweiten Phase der Einführung in eine Einführöffnung.
- Figur 11:: Weiteres Ausführungsbeispiel eines Nutensteins
a) in einer Einzeldarstellung.
b) während der Einführung in eine Einführöffnung.
- Figur 12:: Ausführungsbeispiel eines Befestigungsmittels mit einem Nutenstein
a) in einer Einzeldarstellung.
b) während einer ersten Phase der Einführung des Nutensteins in eine Einführöffnung.
c) während einer zweiten Phase der Einführung des Nutensteins in eine Einführöffnung.
- Figur 13:: Weiteres Ausführungsbeispiel eines Befestigungsmittels mit einem Nutenstein
a) in einer Einzeldarstellung.
b) während einer ersten Phase der Einführung des Nutensteins in eine Einführöffnung.
c) während einer zweiten Phase der Einführung des Nutensteins in eine Einführöffnung.
- Figur 14:: Weiteres Ausführungsbeispiel eines Befestigungsmittels mit einem Nutenstein
a) in einer Einzeldarstellung.
b) bei in einer Nut gelagerten Nutenstein (Längsschnittdarstellung).
c) bei in einer Nut gelagerten Nutenstein (Querschnittdarstellung).

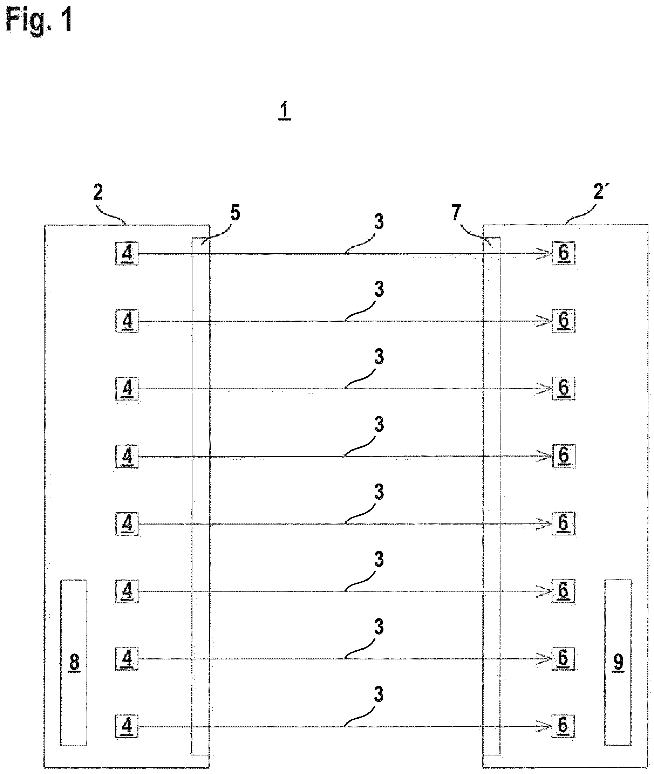

Figur 1 zeigt schematisch den Aufbau eines Ausführungsbeispiels des erfindungsgemäßen Lichtvorhangs 1 zur Erfassung von Objekten innerhalb eines Überwachungsbereichs.

Der Lichtvorhang 1 weist eine Sendereinheit mit einem Gehäuse 2 mit einer Reihenanordnung von Lichtstrahlen 3 emittierenden Sendern 4 auf. Im Gehäuse 2 befindet sich eine für die Lichtstrahlen 3 transparente Frontscheibe 5. Weiterhin weist der Lichtvorhang 1 eine Empfängereinheit mit einem zweiten Gehäuse 2' mit einer Reihenanordnung von Lichtstrahlen 3 empfangenden Empfängern 6 auf. Auch in diesem Gehäuse 2' befindet sich eine für die Lichtstrahlen 3 transparente Frontscheibe 7. Die Gehäuse 2, 2' sind im vorliegenden Fall identisch ausgebildet.

Die Gehäuse 2, 2' sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

In einer weiteren nicht dargestellten Ausführung können Sender 4 und Empfänger 6 in den Gehäusen 2 und 2' gemischt angeordnet sein, wodurch sich nur einzelne Sendestrahlrichtungen ändern, die grundsätzliche Funktion der Erkennung eines Objekteingriffs durch Unterbrechung von Strahlachsen bleibt gleich. In diesem Fall muss die Sendersteuerung 8 auch Auswertefunktionen von Empfängern übernehmen, bzw. die Empfängersteuerung 9 Sendesteuerungsfunktionen für die Sender.

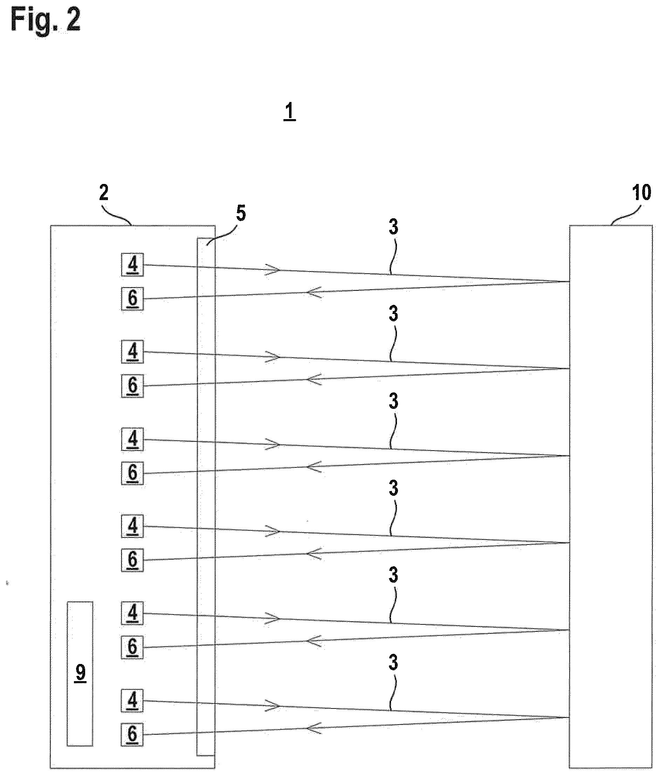

Figur 2 zeigt eine Variante des Lichtvorhangs 1 in Form eines Reflexions-Lichtvorhangs 1. Bei diesem Reflexions-Lichtvorhang ist eine Sender-Empfänger-Einheit mit einem Gehäuse 2 vorgesehen. In der Sender-Empfänger-Einheit sind die einzelnen Sender-Empfänger-Paare nebeneinanderliegend angeordnet. Eine Auswerteeinheit 9 steuert den Senderbetrieb und wertet die Empfangssignale der Empfänger 6 aus. Bei freiem Überwachungsbereich gelangen die von den Sendern 4 emittierten Lichtstrahlen 3 durch die Frontscheibe 5 in den Überwachungsbereich, treffen dann auf einen Reflektor 10, der der Sender-Empfänger-Einheit gegenüberliegend angeordnet ist, und werden vom Reflektor 10 zurück zum zugeordneten Empfänger 6 des jeweiligen Sender-Empfänger-Paars geführt. Ansonsten entspricht der Reflexions-Lichtvorhang dem Lichtvorhang 1 gemäß Figur 1.

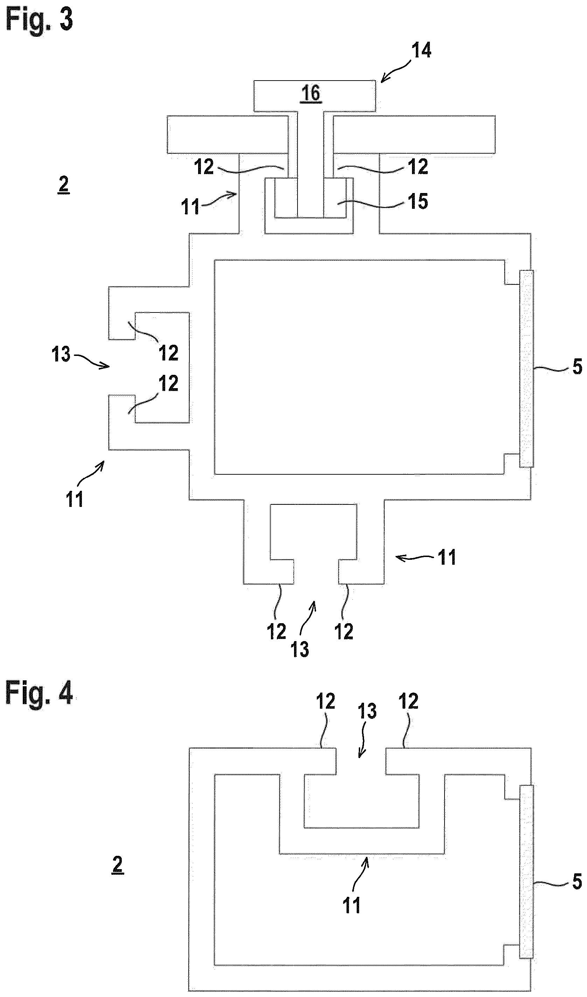

Figur 3 zeigt eine Querschnittsdarstellung einer ersten Ausführungsform des Gehäuses 2 des Lichtvorhangs 1 der Figuren 1 oder 2.

Das Gehäuse 2 weist einen über dessen Länge konstanten Querschnitt auf. Figur 3 zeigt die in einer Seitenwand des Gehäuses 2 gelagerte Frontscheibe 5, durch welche die Lichtstrahlen 3 geführt sind. An den weiteren Seitenwänden ist jeweils eine Nut 11 vorhanden, wobei die Nuten 11 Bestandteil des Gehäuses 2 sind. Die Nuten 11 sind im vorliegenden Fall identisch ausgebildet. Vorteilhaft erstrecken sich alle Nuten 11 über die gesamte Länge des Gehäuses 2. Die Nuten 11 sind im vorliegenden Fall als C-Nuten ausgebildet. Bei jeder Nut 11 sind Randsegmente 12 vorhanden, die eine Ausmündung des Innenraums der Nut 11 bildende Öffnung 13 begrenzen.

In jeder Nut 11 kann ein Befestigungsmittel 14 geführt werden, das zur Befestigung des Gehäuses 2 an einer Unterlage dient. Das in Figur 3 dargestellte Befestigungsmittel 14 ist als Anschraubelement ausgebildet. Das Befestigungsmittel 14 weist einen im Innenraum der Nut 11 verschiebbar gelagerten Nutenstein 15 sowie ein Schraubelement 16, mit dem eine Befestigung an einem Gegenelement der Unterlage erfolgt, auf.

Figur 4 zeigt eine Variante der Ausführungsform des Gehäuses 2 gemäß Figur 3. Bei dem Gehäuse 2 gemäß Figur 4 ist nur eine Nut 11 vorhanden, die im Innenraum des Gehäuses 2 verläuft, wobei sich die Öffnung 13 in einer Seitenwand des Gehäuses 2 befindet.

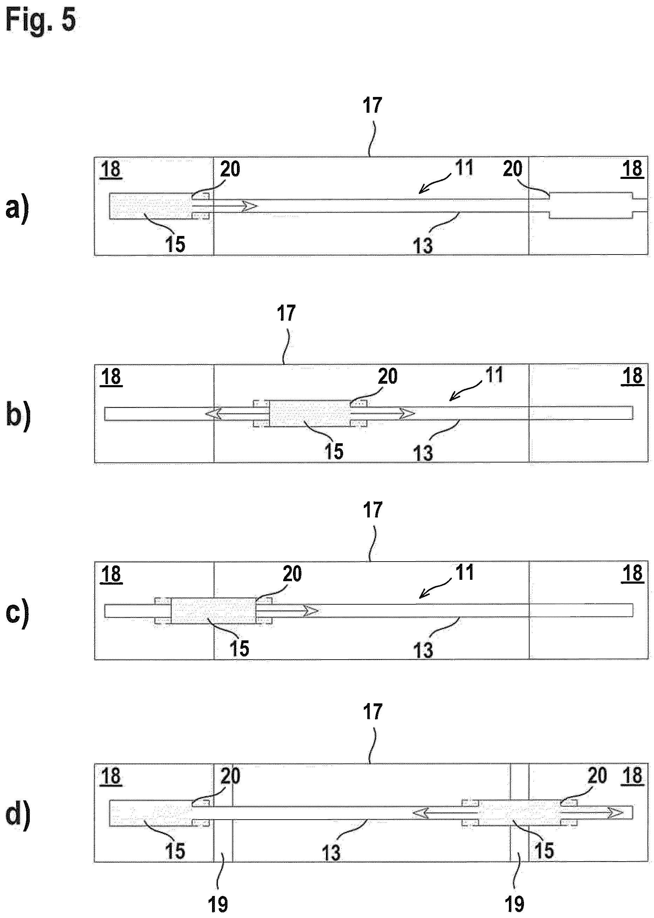

Wie die Figuren 5a bis 5d zeigen, besteht das Gehäuse 2 aus einem Gehäuseprofil 17, in welchem die Frontscheibe 5 gelagert ist, und zwei Endkappen 18, die die offenen längsseitigen Enden des Gehäuseprofils 17 abschließen. Das Gehäuseprofil 17 kann prinzipiell aus mehreren Gehäuseprofilsegmenten bestehen, die in Längsrichtung des Gehäuses 2 hintereinander angeordnet sind.

Optional können zwischen den Endkappen 18 und dem Gehäuseprofil 17 Dichtungen ausbildende Zwischenelemente 19 vorhanden sein, die denselben Querschnitt wie das Gehäuseprofil 17 und die Endkappe 19 aufweisen (Figur 5d).

Erfindungsgemäß weist die Nut 11 des Gehäuses 2 wenigstens eine Einführöffnung 20 auf, die eine Verbreiterung der Öffnung 13 bildet. In den Beispielen gemäß der Figuren 5b, 5c ist nur eine Einführöffnung 20 vorhanden. In den Beispielen gegenüber den Figuren 5a, 5d sind zwei Einführöffnungen 20 vorhanden.

Eine Einführöffnung 20 kann nur im Gehäuseprofil 17 oder in einer Endkappe 18 angeordnet sein. Weiterhin kann sich eine Einführöffnung 20 auch über mehrere derartige Gehäuseelemente erstrecken, wie die Figuren 5c, 5d zeigen.

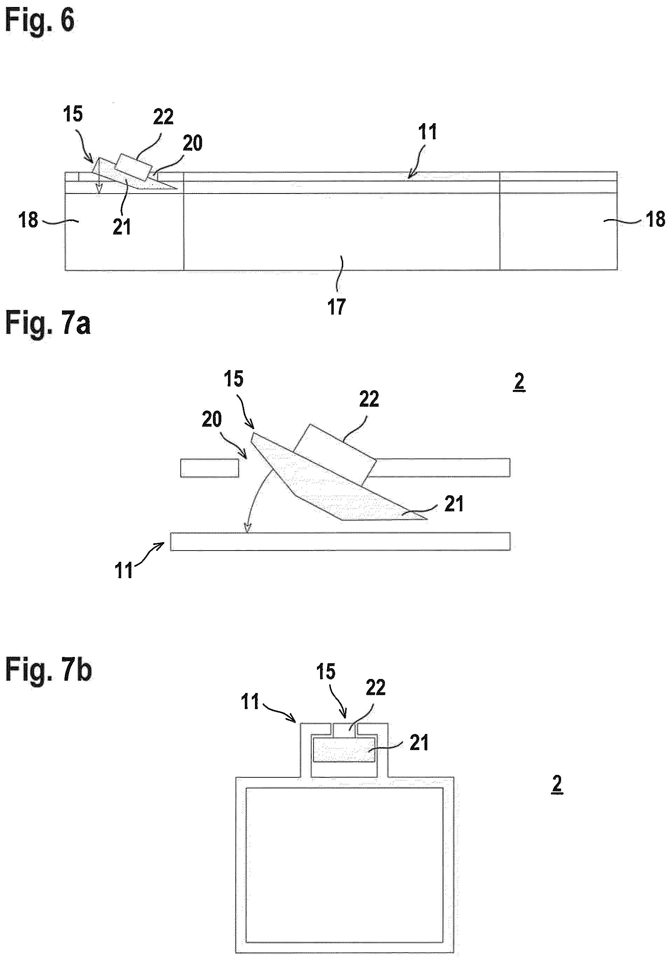

In jede Einführöffnung 20 kann ein Nutenstein 15 eines Befestigungsmittels 14 eingeführt und dann in der Nut 11 verschoben werden, wie mit den Pfeilen in den Figuren 5a bis 5d veranschaulicht. In den Figuren 5a bis 5d ist, wie auch in den Figuren 6 bis 11, der Nutenstein 15 ohne den Rest des Befestigungsmittels 14 dargestellt.

Erfindungsgemäß sind die Längen der Nutensteine 15 größer als die Längen der Einführöffnung 20. Ein Nutenstein 15 wird dann durch Verkippen in die Einführöffnung 20 eingeführt und kann dann in der Nut 11 geführt werden.

Generell ist die Breite des Nutensteins 15 kleiner als die Breite der Einführöffnung 20, so dass der Nutenstein 15 in die Einführöffnung 20 eingeführt werden kann. Jedoch ist die Breite des Nutensteins 15 größer als die Breite der Öffnung 13, so dass der Nutenstein 15 durch die Randsegmente 12 in der Nut 11 gehalten wird.

Da die Länge des Nutensteins 15 größer ist als die Länge der Einführöffnung 20 ist gewährleistet, dass immer wenigstens ein Segment oder Teilsegment des Nutensteins 15 außerhalb der Einführöffnung 20 liegen und im Bereich der Öffnung 13 der Nut 11 angeordnet sind, wodurch der Nutenstein 15 in der Nut 11 gehalten wird.

Ein Beispiel hierfür zeigt Figur 6, dass die Anordnung gemäß Figur 5d in einer Längsschnittdarstellung zeigt.

Der Nutenstein 15 weist in diesem Fall, wie auch in den folgenden Ausführungsbeispielen, ein Innenteil 21 und ein auf dem Innenteil 21 aufsitzendes Teil 22 auf. Die Länge des Innenteils 21 ist größer als die Länge der Einführöffnung 20. Die Breite des Innenteils 21 ist größer als die Breite der Öffnung 13 der Nut 11, jedoch kleiner als die Breite der Einführöffnung 20. Die Breite des Teils 22 ist kleiner als die Breite der Nut 13.

Bei der Ausführungsform gemäß Figur 6 ist ein längsseitiges Ende des Innenteils 21 der Nut 11 abgeschrägt, was das Einführen des Nutensteins 15 in die Einführöffnung 20 durch Verkippen erleichtert.

Die Figuren 7a, 7b zeigen eine Variante der Ausführungsform gemäß Figur 6. Wie Figur 7a zeigt, sind beide längsseitigen Enden des Innenteils 21 des Nutensteins 15 abgeschrägt. Der Nutenstein 15, d.h. das Innenteil 21, wird wieder durch Verkippen in die Einführöffnung 20 eingeführt. Figur 7b zeigt das Gehäuse 2 in einer Querschnittsdarstellung nach dem Einführen des Innenteils 21 in die Nut 11. Das Innenteil 21 liegt dann spielarm im Innenraum der Nut 11, das Teil 22 liegt im Bereich der Öffnung 13 der Nut 11.

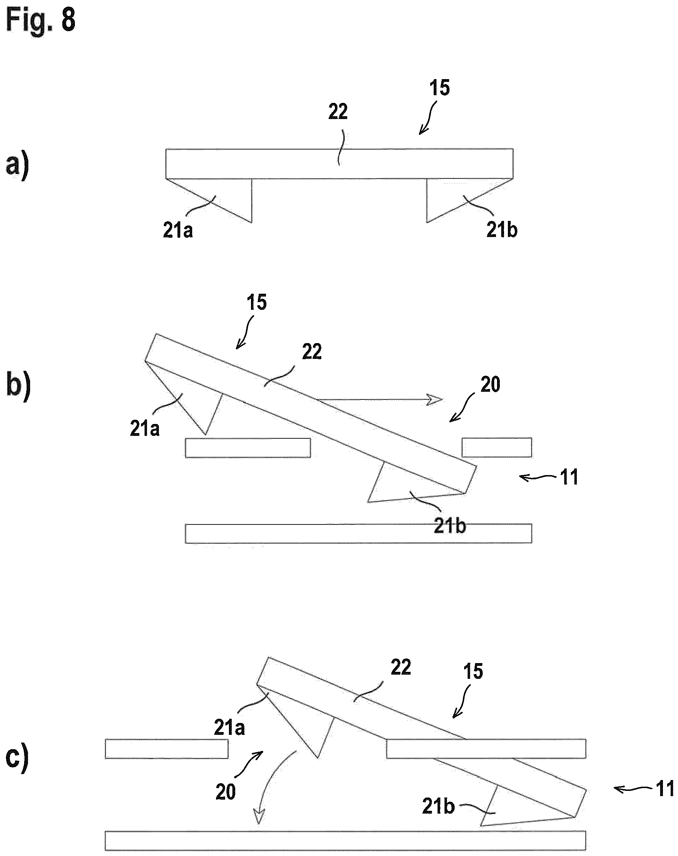

Die Figuren 8 bis 11 zeigen weitere Ausführungsformen von Nutensteinen 15 als Bestandteile von Befestigungsmitteln 14.

Die Figuren 8a, 9a, 10a, 11a zeigen jeweils den Nutenstein 15 in einer Einzeldarstellung. Bei diesen Ausführungsformen besteht der Nutenstein 15 aus einem Teil 22, an dessen Unterseite ein mehrteiliges Innenteil 21, bestehend aus zwei Innenteilsegmenten 21a, 21b, angeordnet ist. Die Innenteilsegmente 21a, 21b befinden sich an den längsseitigen Enden des Teils 22. Die beiden Innenteilsegmente 21a, 21b sind identisch ausgebildet und spiegelsymmetrisch zu der Mittenebene des Nutensteins 15 ausgebildet. Die Innenteilsegmente 21a, 21b weisen Abschrägungen auf.

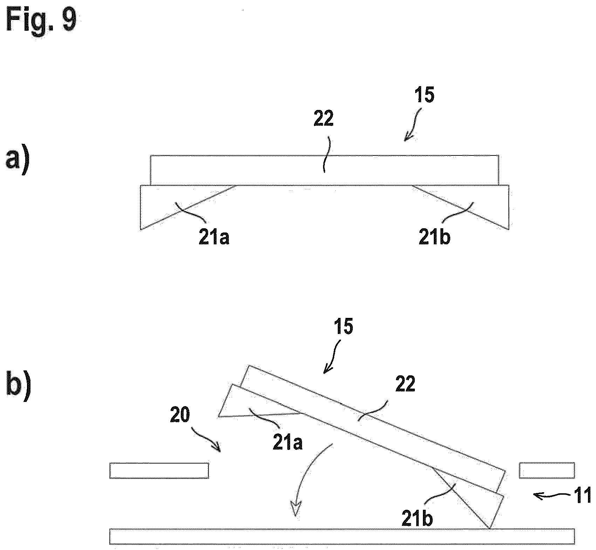

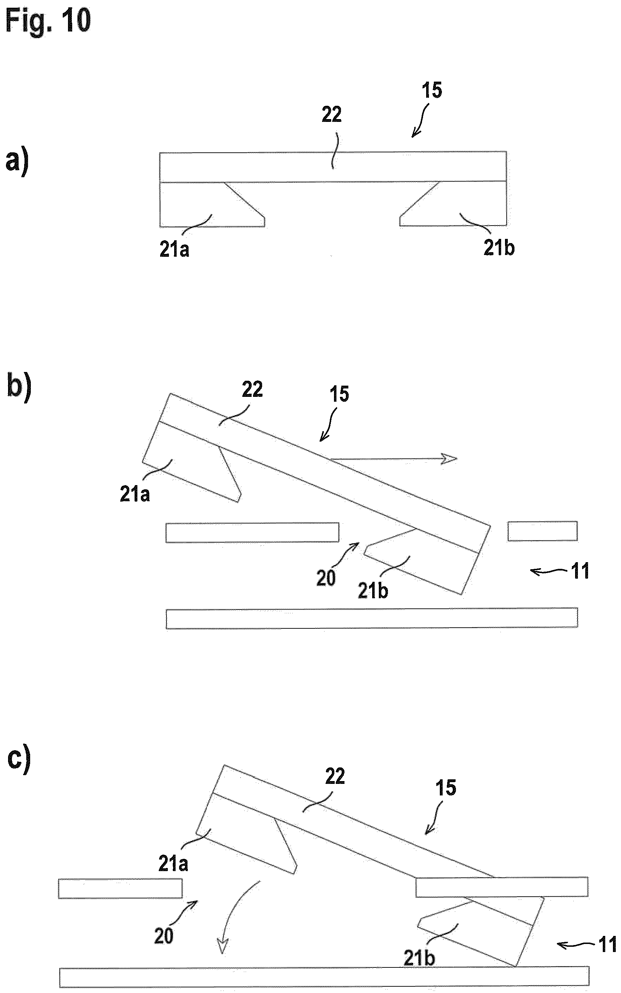

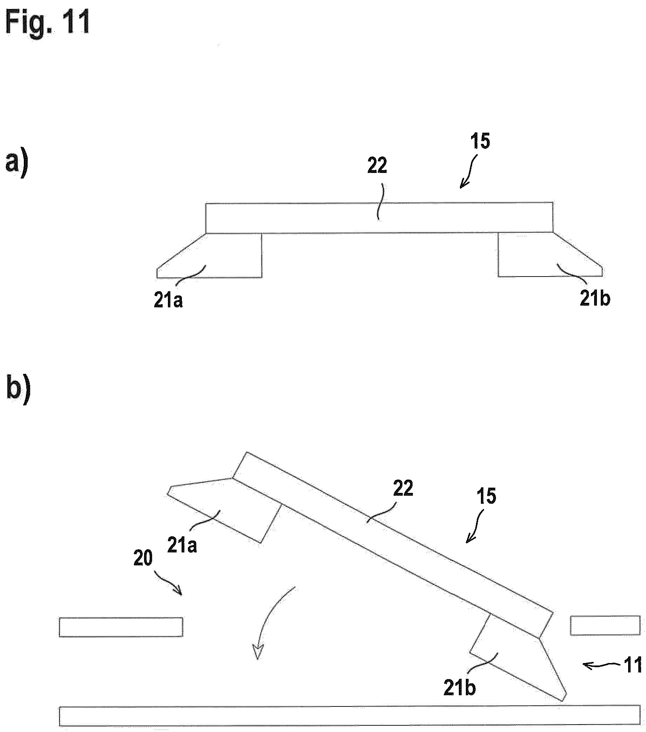

Bei den Ausführungsformen der Figuren 9a und 11a stehen die Innenteilsegmente 21a, 21b über die längsseitigen Ränder des Teils 22, nicht jedoch bei den Ausführungsformen der Figuren 8a und 10a. An das Teil 22 können zusätzliche Klemm- und Befestigungselemente angebracht werden, z.B. ein Schraubelement 16, wie in Figur 3 dargestellt.

Bei den Ausführungsbeispielen der Figuren 8 und 10 ist der Nutenstein 15 so dimensioniert, dass er in einem relativ flachen Neigungswinkel in die Einführöffnung 20 eingeführt werden kann (Figuren 8b, 10b). Somit kann der Nutenstein 15 in einer zweiten Phase weiter aus dem Bereich der Einführöffnung 20 in die Nut 11 eingeschoben werden (Pfeil in den Figuren 8b, 10b), wobei dann das Teil 22 in der Öffnung 13 der Nut 11 geführt ist (Figuren 8c, 10c). Danach kann der Nutenstein 15 vollständig in die Nut 11 abgesenkt werden (Pfeil in den Figuren 8c, 10c).

Bei den Ausführungen der Figuren 9 und 11 muss der Nutenstein 15 in einem steilen Neigungswinkel in die Einführöffnung 20 eingeführt werden, so dass ein anschließendes Verschieben des Nutensteins 15 nicht möglich ist, d.h. der Nutenstein 15 muss dann gleich in die Nut 11 abgesenkt werden (Pfeil in den Figuren 9b, 11b).

Während bei den Ausführungsformen der Figuren 8, 10 der Nutenstein 15 erheblich länger sein kann als die Einführöffnung 20, kann der Nutenstein 15 gemäß den Figuren 9, 11 nur geringfügig länger als die Einführöffnung 20 sein.

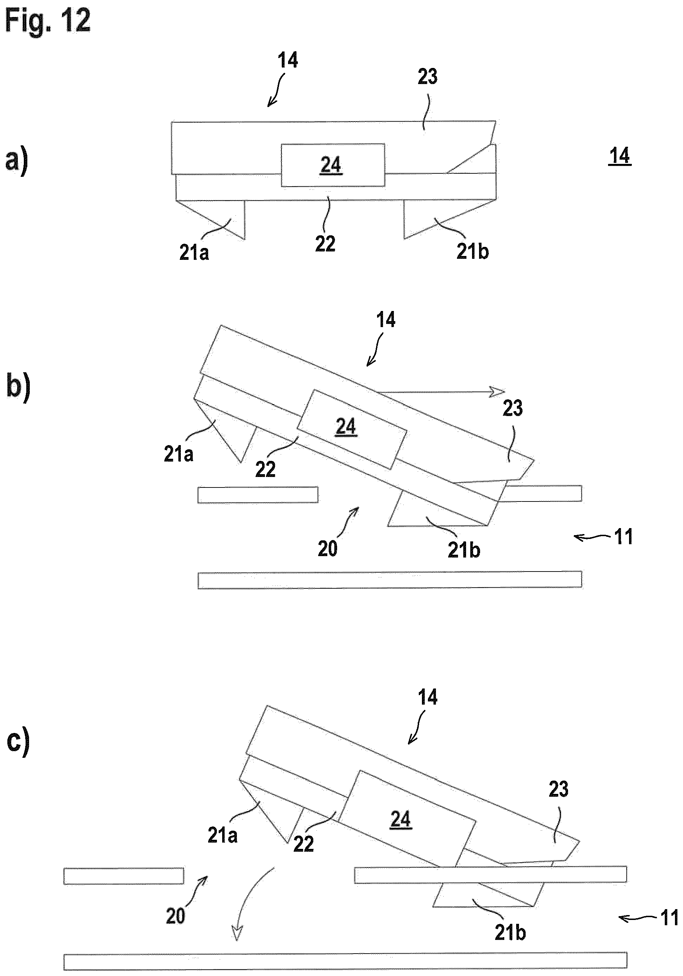

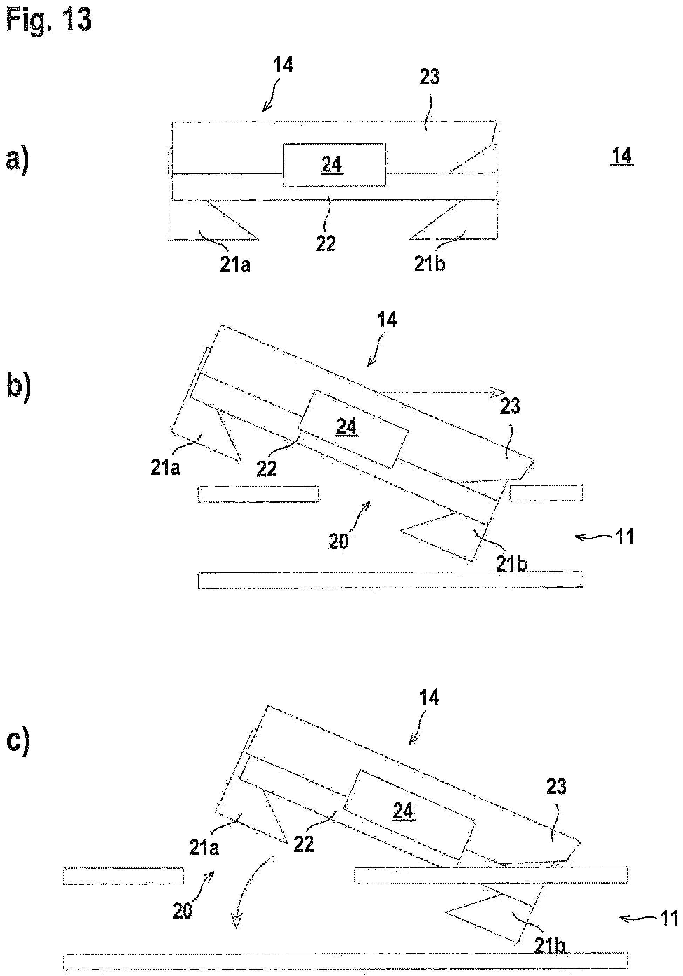

Die Figuren 12a bis 12c und 13a bis 13c zeigen jeweils ein komplettes Befestigungsmittel 14 mit einem Nutenstein 15 bestehend aus einem Teil 22 und einem Innenteil 21 mit zwei Innenteilsegmenten 21a, 21b. Auf dem so gebildeten Nutenstein 15 sitzen Komponenten des Befestigungsmittels 14 in Form einer Platte 23 und einem Andrückelement 24 auf. Die Platte 23 ist einseitig angeschrägt.

Die Befestigungsmittel 14 der Figuren 12a, 13a unterscheiden sich durch die Abschrägungen der Innenteilsegmente 21a, 21b.

Die Figuren 12b, 13b zeigen das Einführen des Nutensteins 15 des Befestigungsmittels in die Einführöffnung 20, wobei das Befestigungsmittel 14 in einem Neigungswinkel zur Nut 11 geneigt ist. Danach kann das Befestigungsmittel 14 in die Nut 11 hineingeschoben werden (Pfeile in den Figuren 12b, 13b), wobei das Teil 22 in der Öffnung 13 der Nut 11 gleitet.

Die Figuren 12c, 13c zeigen die Endpositionen des Befestigungsmittels 14, in denen der Nutenstein 15 komplett in die Nut 11 abgesenkt wird (Pfeile in den Figuren 12c, 13c).

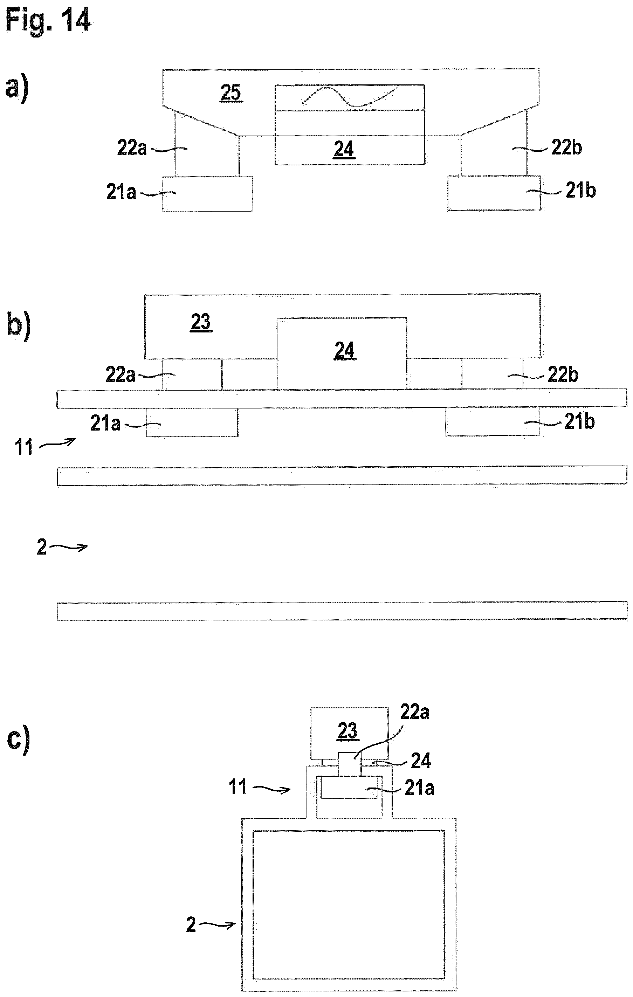

Figur 14a zeigt in einer Einzeldarstellung eine Variante des Befestigungsmittels 14 gemäß den Figuren 12a, 13b. Das Befestigungsmittel 14 gemäß Figur 14a unterscheidet sich von den Befestigungsmitteln 14 gemäß den Figuren 12a, 13b dadurch, dass nicht nur das Innenteil 21 des Nutensteins 15 aus zwei separaten Innenteilsegmenten 21a, 21b besteht. Auch das Teil 22 des Nutensteins 15 besteht aus zwei Teilsegmenten 22a, 22b, an welchen jeweils ein Innenteilsegment 21a, 21b gelagert ist.

Figur 14b zeigt das Befestigungsmittel 14, wenn der Nutenstein 15 mit dem Innenteilsegment 21a, 21b in der Nut 11 geführt ist. Figur 14c zeigt eine entsprechende Querschnittsdarstellung.

Das Befestigungsmittel 14 weist wieder eine Platte 23 und ein Andrückelement 24 auf. Das Andrückelement 24 ist über ein Federelement 25 an die Platte 23 gekoppelt. Das Andrückelement 24 wird gegen die Federkraft des Federelements 25 ausgehend von der Platte 23 gegen das Profil der Nut 11 gedrückt. Alternativ kann das Andrückelement 24 selbst elastisch sein und eine Andrückkraft generieren.

Dieser Aufbau des Befestigungsmittels 14 ist auch bei den Ausführungsformen der Figuren 12a, 13a vorhanden.

### Bezugszeichenliste

- (1): Lichtvorhang
- (2): Gehäuse
- (2'): Gehäuse
- (3): Lichtstrahl
- (4): Sender
- (5): Frontscheibe
- (6): Empfänger
- (7): Frontscheibe
- (8): Sendersteuerung
- (9): Auswerteeinheit
- (10): Reflektor
- (11): Nut
- (12): Randsegment
- (13): Öffnung
- (14): Befestigungsmittel
- (15): Nutenstein
- (16): Schraubenelement
- (17): Gehäuseprofil
- (18): Endkappe
- (19): Zwischenelement
- (20): Einführöffnung
- (21): Innenteil
- (21a): Innenteilsegment
- (21b): Innenteilsegment
- (22): Teil
- (22a): Teilsegment
- (22b): Teilsegment
- (23): Platte
- (24): Andrückelement
- (25): Federelement

## Patentansprüche

1. Lichtvorhang (1) zur Erfassung von Objekten in einem Überwachungsbereich mit einer Reihenanordnung von Lichtstrahlen (3) emittierenden Sendern (4), und mit einer Reihenanordnung von Lichtstrahlen (3) empfangenden Empfängern (6), deren Empfangssignale in einer Auswerteeinheit (9) ausgewertet werden, wobei wenigstens ein Gehäuse (2, 2') vorhanden ist, in welchem die Sender (4) und/oder Empfänger (6) vorhanden sind, wobei das Gehäuse (2, 2') eine oder mehrere sich über dessen Länge erstreckende Nuten (11) aufweist, wobei Randsegmente (12) des Gehäuses (2) eine Öffnung (13) der Nut (11) begrenzen, wobei die Öffnung (13) eine Ausmündung der Nuten (11) in oder an einer Seitenwand des Gehäuses (2) bildet, **dadurch gekennzeichnet, dass** die Öffnung (13) in einem Teilbereich der Nut (11) verbreitert ist, wodurch eine Einführöffnung (20) gebildet ist, dass Befestigungsmittel (14) vorhanden sind, wobei jedes Befestigungsmittel (14) einen Nutenstein (15) aufweist, dass der Nutenstein (15) über die Einführöffnung (20) eingeführt werden kann, wobei die Breite des Nutensteins (15) kleiner als die Breite der Einführöffnung (20) und größer als die Breite der Öffnung (13) der Nut (11) ist, und wobei die Länge des Nutensteins (15) größer als die Länge der Einführöffnung (20) ist.

2. Lichtvorhang (1) nach Anspruch 1, **dadurch gekennzeichnet, dass** die Nut (11) mehrere Einführöffnungen (20) aufweist.

3. Lichtvorhang (1) nach einem der Ansprüche 1 oder 2, **dadurch gekennzeichnet, dass** am Gehäuse (2) mehrere Nuten (11) mit Einführöffnungen (20) vorhanden sind.

4. Lichtvorhang (1) nach einem der Ansprüche 1 bis 3, **dadurch gekennzeichnet, dass** die oder jede Nut (11) eine C-Nut ist.

5. Lichtvorhang (1) nach einem der Ansprüche 1 bis 4, **dadurch gekennzeichnet, dass** das oder jedes Gehäuse (2, 2') als Gehäuseelemente ein Gehäuseprofil (17) und zwei Endkappen (18, 19) aufweist, wobei die Endkappen (18, 19) jeweils eine Gehäuseöffnung an einem längsseitigen Ende des Gehäuseprofils (17) abschließen.

6. Lichtvorhang (1) nach Anspruch 5, **dadurch gekennzeichnet, dass** das Gehäuseprofil (17) mehrere in dessen Längsrichtung hintereinander angeordnete Gehäuseprofilsemente aufweist.

7. Lichtvorhang (1) nach Anspruch 6, **dadurch gekennzeichnet, dass** zwischen dem Gehäuseprofil (17) und den Endkappen (18, 19) und/oder zwischen den Gehäuseprofilsegmenten als weitere Gehäuseelemente Dichtungen ausbildende Zwischenelemente (19) vorhanden sind.

8. Lichtvorhang (1) nach einem der Ansprüche 4 bis 7, **dadurch gekennzeichnet, dass** sich die oder jede Nut (11) über die gesamte Länge oder über Teillängen des Gehäuses (2) entlang der Gehäuseelemente erstreckt.

9. Lichtvorhang (1) nach einem der Ansprüche 4 bis 8, **dadurch gekennzeichnet, dass** die oder eine Einführöffnung (20) nur im Bereich eines Gehäuseelements vorhanden ist, oder dass sich die oder eine Einführöffnung (20) über mehrere Gehäuseelemente erstreckt.

10. Lichtvorhang (1) nach einem der Ansprüche 1 bis 9, **dadurch gekennzeichnet, dass** jeder Nutenstein (15) aus einem Teil (22) und einem Innenteil (21) besteht, wobei bei am Gehäuse (2) montiertem Befestigungsmittel (14) das Innenteil (21) innerhalb der Nut (11) liegt.

11. Lichtvorhang (1) nach Anspruch 10, **dadurch gekennzeichnet, dass** das Innenteil (21) über die längsseitigen Enden des Teils (22) hervorsteht.

12. Lichtvorhang (1) nach einem der Ansprüche 10 oder 11, **dadurch gekennzeichnet, dass** das Innenteil (21) wenigstens an einem längsseitigen Ende abgeschrägt oder abgerundet ist.

13. Lichtvorhang (1) nach einem der Ansprüche 10 bis 12, **dadurch gekennzeichnet, dass** das Innenteil (21) ein- oder mehrteilig ist.

14. Lichtvorhang (1) nach einem der Ansprüche 10 bis 13, **dadurch gekennzeichnet, dass** die Breite des Innenteils (21) größer als die Breite der Öffnung (13) der Nut (11) ist, jedoch kleiner als die Breite der Einführöffnung (20), und dass die Breite des Teils (22) kleiner als die Breite der Öffnung (13) ist.

15. Lichtvorhang (1) nach einem der Ansprüche 1 bis 14, **dadurch gekennzeichnet, dass** die Befestigungsmittel (14) als Anschraubelemente ausgebildet sind.

## Claims

1. Light curtain (1) for detecting objects in a surveillance area, having a series arrangement of transmitters (4) emitting light beams (3), and having a series arrangement of receivers (6) receiving light beams (3), the received signals of which are analysed in an evaluation unit (9), wherein at least one housing (2, 2') is present, in which the transmitters (4) and/or receivers (6) are present, wherein the housing (2, 2') has one or more grooves (11) extending over its length, wherein edge segments (12) of the housing (2) delimit an opening (13) of the groove (11), wherein the opening (13) forms an opening of the grooves (11) in or on a side wall of the housing (2), **characterised in that** the opening (13) is widened in a partial region of the groove (11), whereby an insertion opening (20) is formed, **in that** fastening means (14) are present, wherein each fastening means (14) has a slot nut (15), **in that** the sliding block (15) can be inserted via the insertion opening (20), the width of the sliding block (15) being smaller than the width of the insertion opening (20) and greater than the width of the opening (13) of the groove (11), and the length of the sliding block (15) being greater than the length of the insertion opening (20).

2. Light curtain (1) according to claim 1, **characterised in that** the groove (11) has a plurality of insertion openings (20).

3. Light curtain (1) according to one of claims 1 or 2, **characterised in that** a plurality of grooves (11) with insertion openings (20) are present on the housing (2).

4. Light curtain (1) according to one of claims 1 to 3, **characterised in that** the or each groove (11) is a C-groove.

5. Light curtain (1) according to one of claims 1 to 4, **characterised in that** the or each housing (2, 2') has a housing profile (17) and two end caps (18, 19) as housing elements, wherein the end caps (18, 19) each close off a housing opening at a longitudinal end of the housing profile (17).

6. Light curtain (1) according to claim 5, **characterised in that** the housing profile (17) has a plurality of housing profile elements arranged one behind the other in its longitudinal direction.

7. Light curtain (1) according to claim 6, **characterised in that** intermediate elements (19) forming seals are present between the housing profile (17) and the end caps (18, 19) and/or between the housing profile segments as further housing elements.

8. Light curtain (1) according to one of claims 4 to 7, **characterised in that** the or each groove (11) extends over the entire length or over partial lengths of the housing (2) along the housing elements.

9. Light curtain (1) according to one of claims 4 to 8, **characterised in that** the or an insertion opening (20) is only present in the region of one housing element, or **in that** the or an insertion opening (20) extends over several housing elements.

10. Light curtain (1) according to one of claims 1 to 9, **characterised in that** each groove block (15) consists of a part (22) and an inner part (21), wherein the inner part (21) lies within the groove (11) when the fastening means (14) is mounted on the housing (2).

11. Light curtain (1) according to claim 10, **characterised in that** the inner part (21) protrudes beyond the longitudinal ends of the part (22).

12. Light curtain (1) according to one of claims 10 or 11, **characterised in that** the inner part (21) is bevelled or rounded at least at one longitudinal end.

13. Light curtain (1) according to one of claims 10 to 12, **characterised in that** the inner part (21) is in one or more parts.

14. Light curtain (1) according to one of claims 10 to 13, **characterised in that** the width of the inner part (21) is greater than the width of the opening (13) of the groove (11), but smaller than the width of the insertion opening (20), and **in that** the width of the part (22) is smaller than the width of the opening (13).

15. Light curtain (1) according to one of claims 1 to 14, **characterised in that** the fastening means (14) are designed as screw-on elements.

## Revendications

1. Rideau lumineux (1) pour la détection d'objets dans une zone de surveillance, comportant une série d'émetteurs (4) émettant des faisceaux lumineux (3), et comportant une série de récepteurs (6) recevant des faisceaux lumineux (3), dont les signaux reçus sont analysés dans une unité d'évaluation (9), dans laquelle au moins un boîtier (2, 2') est présent, dans lequel les émetteurs (4) et/ou les récepteurs (6) sont présents, dans lequel le boîtier (2, 2') comporte une ou plusieurs rainures (11) s'étendant sur sa longueur, dans lequel des segments de bord (12) du boîtier (2) délimitent une ouverture (13) de la rainure (11), dans lequel l'ouverture (13) forme une ouverture des rainures (11) dans ou sur une paroi latérale du boîtier (2), **caractérisé en ce que** l'ouverture (13) est élargie dans une zone partielle de la rainure (11), ce qui forme une ouverture d'insertion (20), dans laquelle des moyens de fixation (14) sont présents, chaque moyen de fixation (14) ayant un écrou à fente (15), de sorte que le bloc coulissant (15) peut être inséré via l'ouverture d'insertion (20), la largeur du bloc coulissant (15) est inférieure à la largeur de l'ouverture d'insertion (20) et supérieure à la largeur de l'ouverture (13) de la rainure (11), et la longueur du bloc coulissant (15) est supérieure à la longueur de l'ouverture d'insertion (20).

2. Rideau lumineux (1) selon la revendication 1, **caractérisé par le fait que** la rainure (11) présente une pluralité d'ouvertures d'insertion (20).

3. Rideau lumineux (1) selon l'une des revendications 1 ou 2, **caractérisé en ce qu'**une pluralité de rainures (11) avec des ouvertures d'insertion (20) sont présentes sur le boîtier (2).

4. Rideau lumineux (1) selon l'une des revendications 1 à 3, **caractérisé par le fait que** la ou chaque rainure (11) est une rainure en C.

5. Rideau lumineux (1) selon l'une des revendications 1 à 4, **caractérisé en ce que** le ou chaque boîtier (2, 2') a un profil de boîtier (17) et deux capuchons d'extrémité (18, 19) comme éléments de boîtier, dans lequel les capuchons d'extrémité (18, 19) ferment chacun une ouverture de boîtier à une extrémité longitudinale du profil de boîtier (17).

6. Rideau lumineux (1) selon la revendication 5, **caractérisé par le fait que** le profilé de logement (17) comporte plusieurs éléments de profilé de logement disposés l'un derrière l'autre dans le sens de la longueur.

7. Rideau lumineux (1) selon la revendication 6, **caractérisé en ce que** des éléments intermédiaires (19) formant des joints sont présents entre le profilé de logement (17) et les capuchons d'extrémité (18, 19) et/ou entre les segments de profilé de logement en tant qu'autres éléments de logement.

8. Rideau lumineux (1) selon l'une des revendications 4 à 7, **caractérisé par le fait que** la ou chaque rainure (11) s'étend sur toute la longueur ou sur des longueurs partielles du boîtier (2) le long des éléments du boîtier.

9. Rideau lumineux (1) selon l'une des revendications 4 à 8, **caractérisé par le fait que** l'ouverture d'insertion (20) n'est présente qu'au niveau d'un élément du boîtier, ou **par le fait que** l'ouverture d'insertion (20) s'étend sur plusieurs éléments du boîtier.

10. Rideau lumineux (1) selon l'une des revendications 1 à 9, **caractérisé en ce que** chaque bloc de rainure (15) est constitué d'une partie (22) et d'une partie intérieure (21), la partie intérieure (21) se trouvant à l'intérieur de la rainure (11) lorsque le moyen de fixation (14) est monté sur le boîtier (2).

11. Rideau lumineux (1) selon la revendication 10, **caractérisé par le fait que** la partie intérieure (21) dépasse les extrémités longitudinales de la partie (22).

12. Rideau lumineux (1) selon l'une des revendications 10 ou 11, **caractérisé en ce que** la partie intérieure (21) est biseautée ou arrondie au moins à une extrémité longitudinale.

13. Rideau lumineux (1) selon l'une des revendications 10 à 12, **caractérisé en ce que** la partie intérieure (21) est en une ou plusieurs parties.

14. Rideau lumineux (1) selon l'une des revendications 10 à 13, **caractérisé en ce que** la largeur de la partie intérieure (21) est supérieure à la largeur de l'ouverture (13) de la rainure (11), mais inférieure à la largeur de l'ouverture d'insertion (20), et **en ce que** la largeur de la partie (22) est inférieure à la largeur de l'ouverture (13).

15. Rideau lumineux (1) selon l'une des revendications 1 à 14, **caractérisé par le fait que** les moyens de fixation (14) sont conçus comme des éléments à visser.
